# EUROPÄISCHE PATENTANMELDUNG

(11) **EP 1 376 802 A1**
(43) Veröffentlichungstag der Anmeldung: **02.01.2004**
(21) Anmeldenummer: 03013050.4
(22) Anmeldetag: 10.06.2003
(51) Int. Cl.: H02G 3/14

(54) **Abdeckrahmen für ein elektrisches Installationsgerät**

(30) Priorität: 20.06.2002 DE 10227562
(71) Anmelder: SIEMENS AKTIENGESELLSCHAFT, 80333 München (DE)
(72) Erfinder: Bogner, Markus, 92366 Hohenfels (DE); Huttner, Roland, 93133 Burglengenfeld (DE)

(57) **Zusammenfassung**

Die Erfindung betrifft einen Abdeckrahmen (1) für ein elektrisches Installationsgerät, der wenigstens einen Bezeichnungsschildträger mit wenigstens einem Beschriftungsteil aufweist. Dadurch, dass der wenigstens eine Bezeichnungsschildträger als Schildmodul (2) ausgebildet ist, das in wenigstens eine Aussparung (11) des Abdeckrahmens (1) einsetzbar ist, ist der Bezeichnungsschildträger sowohl einfach zu montieren als auch einfach zu demontieren.

## Beschreibung

Die Erfindung betrifft einen Abdeckrahmen für ein elektrisches Installationsgerät, der wenigstens einen Bezeichnungsschildträger mit wenigstens einem Beschriftungsteil aufweist.

Unter dem Begriff "elektrisches Installationsgerät" sind bei der vorliegenden Erfindung z.B. Schalter, Taster, Steckdosen und Ergänzungsgeräte, beispielsweise Kommunikations-Steckvorrichtungen, Dimmer und Blindplatten, zu verstehen.

Bei diesen Installationsgeräten ist es oft zweckmäßig, anzugeben, welche elektrische Verbraucher mit ihnen elektrisch leitend verbunden ist.

Durch die EP 0 344 641 B1 ist ein Abdeckrahmen für ein elektrisches Installationsgerät bekannt, in dem mindestens ein Sichtfenster eingelassen ist. Unmittelbar direkt des Sichtfensters schmiegt sich ein Bezeichnungsschildträger an den Abdeckrahmen an. Die unmittelbar unter dem Sichtfenster anliegende Fläche des Bezeichnungsschildträgers ist größer als die Fläche des Sichtfensters. Die äußeren Ränder des Bezeichnungsschildträgers werden hierdurch nicht nach außen sichtbar. Der Bezeichnungsschildträger weist ein Schildeinschubfach auf, in welches ein Bezeichnungsschild eingeschoben ist. Bei dem Abdeckrahmen gemäß der EP 0 344 641 B1 ist die Beschriftung des Bezeichnungsschildes nur vor der Montage des Abdeckrahmens möglich. Weiterhin muss zum Austausch des Bezeichnungsschildes der Abdeckrahmen vom Installationsgerät demontiert werden.

Aufgabe der vorliegenden Erfindung ist es, einen Abdeckrahmen für ein elektrisches Installationsgerät zu schaffen, dessen Bezeichnungsschildträger sowohl einfach zu montieren als auch einfach zu demontieren ist.

Die Aufgabe wird erfindungsgemäß durch einen Abdeckrahmen mit den Merkmalen des Anspruchs 1 gelöst. Vorteilhafte Ausgestaltungen der Erfindung sind jeweils Gegenstand von weiteren Ansprüchen.

Der Abdeckrahmen nach Anspruch 1 weist wenigstens einen Bezeichnungsschildträger mit wenigstens einem Bezeichnungsschild auf. Der wenigstens eine Bezeichnungsschildträger ist erfindungsgemäß als Schildmodul ausgebildet, das in wenigstens eine Aussparung des Abdeckrahmens einsetzbar ist. Dadurch wird - im Gegensatz zu den bekannten Abdeckrahmen - sowohl eine einfache Montage als auch eine einfache Demontage des als Schildmodul ausgebildeten Bezeichnungsschildträgers ermöglicht. Darüber hinaus ist auf einfache Weise eine nachträgliche Beschriftung bzw. Änderung der Beschriftung gewährleistet.

Bei einer vorteilhaften Ausgestaltung des Abdeckrahmens (Anspruch 2) weist das Schildmodul Tastelemente auf, durch die das Schildmodul beim Einsetzen in die Aussparung des Abdeckrahmens mit dem Abdeckrahmen verrastet. Das Schildmodul kann damit ohne weitere Hilfsmittel nach dem Abschluss der kompletten Installation in den Abdeckrahmen eingesetzt und mit diesem verrastet werden.

Bei einer weiteren vorteilhaften Ausgestaltung des Abdeckrahmens (Anspruch 3) besteht das Schildmodul aus einem Moduloberteil und einem Modulunterteil, zwischen denen wenigstens ein Beschriftungsteil angeordnet ist. Diese Bauweise des Schildmoduls ermöglicht eine einfache Beschriftung und Montage, da das Schildmodul lediglich aus drei Einzelteilen besteht, die zunächst separat montiert werden, um dann als Ganzes in den Abdeckrahmen eingesetzt zu werden.

Nachfolgend werden Ausführungsbeispiele der Erfindung anhand der Zeichnung näher erläutert. Es zeigen:
- FIG 1: eine Draufsicht auf eine Ausführungsform des erfindungsgemäßen Abdeckrahmens mit einem eingesetzten Schildmodul,
- FIG 2: einen Querschnitt durch den Abdeckrahmen gemäß FIG 1,
- FIG 3: die Komponenten eines Schildmoduls für den Abdeckrahmen gemäß FIG 1,
- FIG 4 und 5: die Montage des Schildmoduls, wobei das Beschriftungsteil eingelegt ist,
- FIG 6: die Montage des Schildmoduls, wobei das Beschriftungsteil eingeklebt ist,
- FIG 7 und 8: die Demontage des Schildmoduls,
- FIG 9: eine Draufsicht auf eine Ausführungsform eines Einfach-Abdeckrahmens,
- FIG 10: eine rückseitige Ansicht des Abdeckrahmens gemäß FIG 9,
- FIG 11: eine Draufsicht auf eine erste Ausführungsform eines Zweifach-Abdeckrahmens,
- FIG 12: eine rücksichtige Ansicht des Abdeckrahmens gemäß FIG 11,
- FIG 13: eine Draufsicht auf eine zweite Ausführungsform eines Zweifach-Abdeckrahmens,
- FIG 14: eine rücksichtige Ansicht des Abdeckrahmens gemäß FIG 13,
- FIG 15: die Montage des Schildmoduls in einem Abdeckrahmen gemäß FIG 9,
- FIG 16: eine Teilschnittdarstellung des verrasteten Schildmoduls im Bereich der Aussparung des Abdeckrahmens.

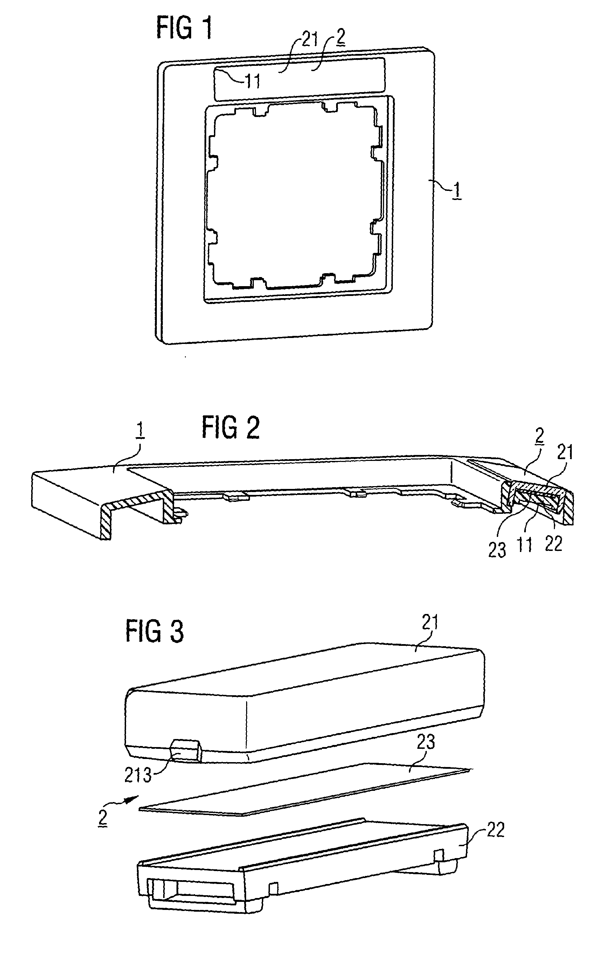

Der in den FIG 1 und 2 dargestellte Abdeckrahmen 1 weist einen Bezeichnungsschildträger 2 auf, der als Schildmodul ausgebildet ist. Das Schildmodul 2 ist in eine Aussparung 11 des Abdeckrahmens 1 eingesetzt und mit dem Abdeckrahmen 1 verrastet.

Wie aus FIG 3 ersichtlich ist, besteht das Schildmodul 2 aus einem Moduloberteil 21, einem Modulunterteil 22 und einem Beschriftungsteil 23. Das Beschriftungsteil 23 ist im dargestellten Ausführungsbeispiel als Bezeichnungsschild ausgeführt. Das Beschriftungsteil 23 ist zwischen dem Moduloberteil 21 und dem Modulunterteil 22 angeordnet. Bei dem in FIG 3 dargestellten Ausführungsbeispiel weist das Schildmodul 2 eine geschlossene Bauform auf. Dadurch ist ein zuverlässiger Schutz gegen eindringende Feuchtigkeit gewährleistet.

Weiterhin ist das in FIG 3 gezeigte Schildmodul 2 weiterhin symmetrisch aufgebaut, so dass auf eine definierte Einbaulage des Schildmoduls 2 nicht geachtet werden muss.

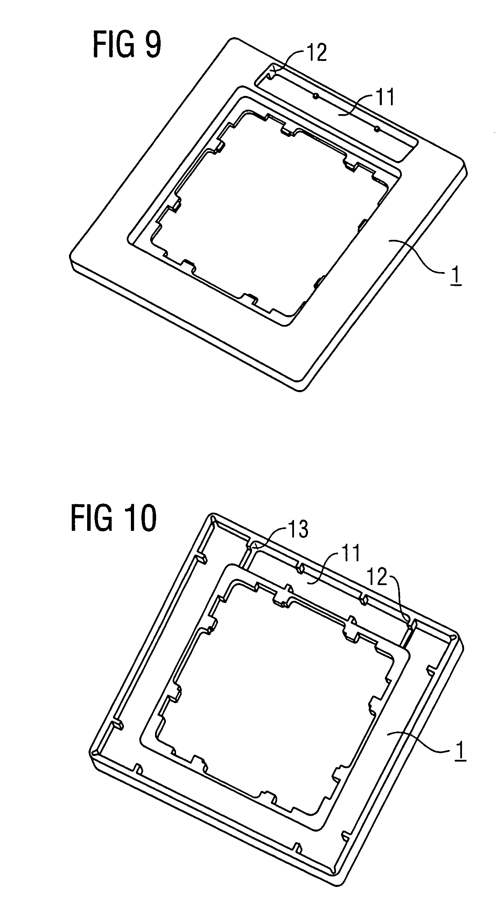

Das in FIG 3 dargestellte Schildmodul 2 ist für die verschiedensten Varianten von Abdeckrahmen geeignet. Eine Auswahl der geeigneten Abdeckrahmen ist in den FIG 9 bis 14 in verschiedenen Ansichten dargestellt.

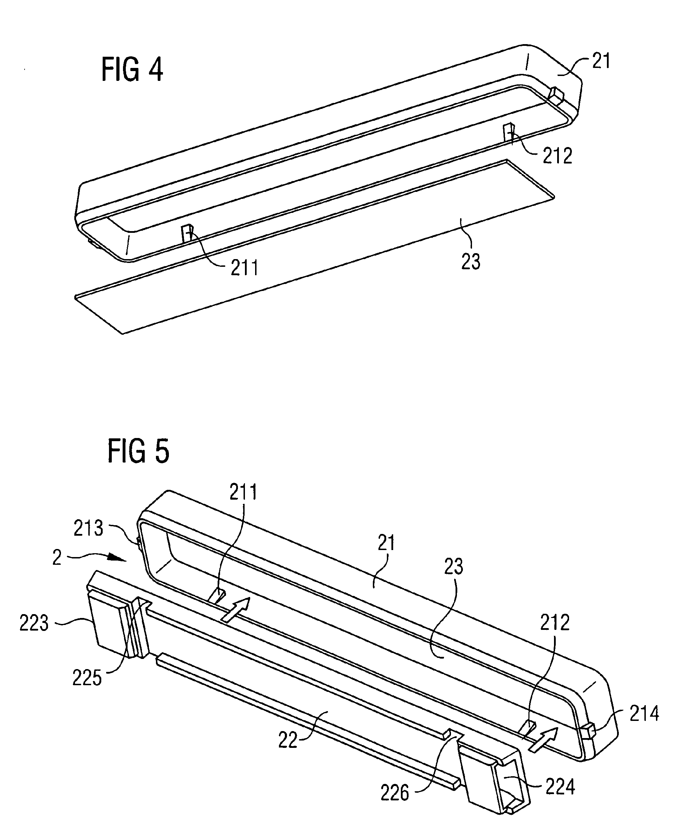

In den FIG 4 bis 8 ist die Montage bzw. die Demontage des Schildmoduls 2 dargestellt.

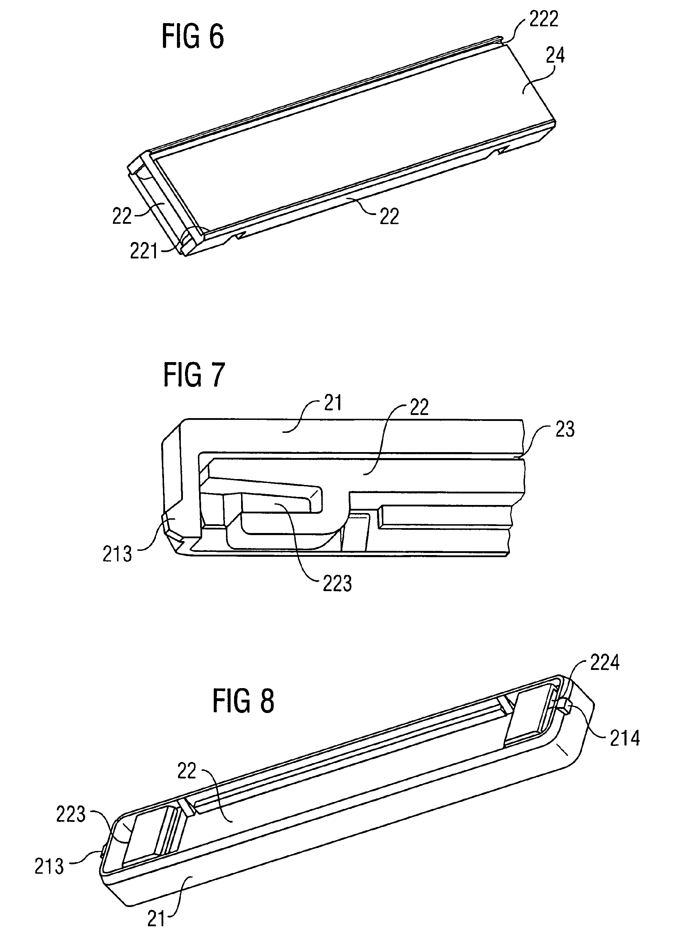

Bei der Montage des Schildmoduls 2 muss zwischen der Variante mit eingelegtem Beschriftungsteil 23 (FIG 4 und 5) und der Variante mit eingeklebtem Beschriftungsteil 24 (FIG 6) unterschieden werden.

Bei der Variante mit eingelegtem Beschriftungsteil 23 (FIG 4 und 5) wird in einem ersten Montageschritt das Beschriftungsteil 23 mit der Schrift nach unten in das Moduloberteil 21 eingelegt (Schrift auf der dem Moduloberteil 21 zugewandten Seite). Anschließend wird das Modulunterteil 22 in das Moduloberteil 21 eingeschnappt. Das Modulunterteil 22 wird hierbei in Pfeilrichtung auf das Moduloberteil 21 aufgedrückt. Beim Zusammendrücken des Modulunterteils 22 und des Moduloberteils 21 verrastet das Modulunterteil 22 mit seinen Rastnuten 225 und 226 mit vier korrespondierenden Rastnasen des Moduloberteils 21. In FIG 5 sind nur die Rastnasen 211 und 212 sichtbar, die nicht sichtbaren Rastnasen liegen den sichtbaren Rastnasen 211 und 212 gegenüber.

Bei der Variante mit selbstklebendem Beschriftungsteil 24 (FIG 6 und 7) wird zunächst das Beschriftungsteil 24, das als Beschriftungsstreifen ausgebildet ist, auf das Modulunterteil 22 geklebt. Vorteilhaft ist es hierbei, den Beschriftungsstreifen bündig zu einer der Kanten 221 bzw. 222 des Modulunterteils 22 auszurichten (Klebefixierungshilfe).

Die Demontage des montierten Schildmoduls 2 (FIG 7 und 8) ist für beide Beschriftungsteile 23 und 24 identisch.

Um eine einfache Demontage des montierten Schildmoduls 2 zu gewährleisten, weist das Modulunterteil 22 an seinen beiden Querseiten jeweils eine auf der Rückseite angeordnete Demontage-Öffnung 223 und 224 auf. Zur Demontage des Schildmoduls 2 wird in eine der beiden Demontage-Öffnungen 223 bzw. 224 von der Rückseite des Schildmoduls 2 her ein Schlitz-Schraubendreher in Pfeilrichtung (FIG 7) eingeführt und das Modulunterteil 22 ausgehebelt.

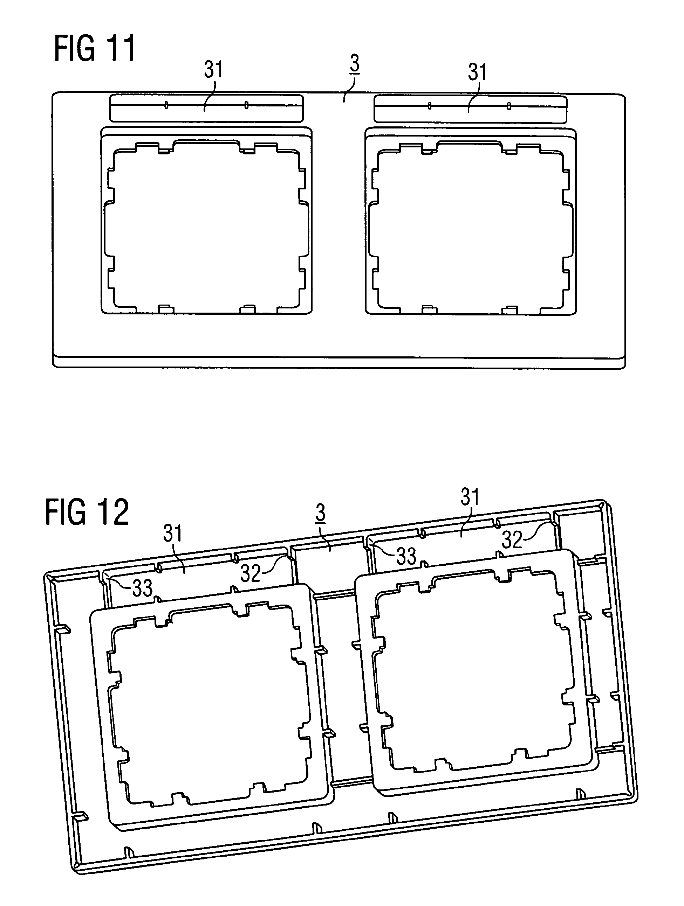

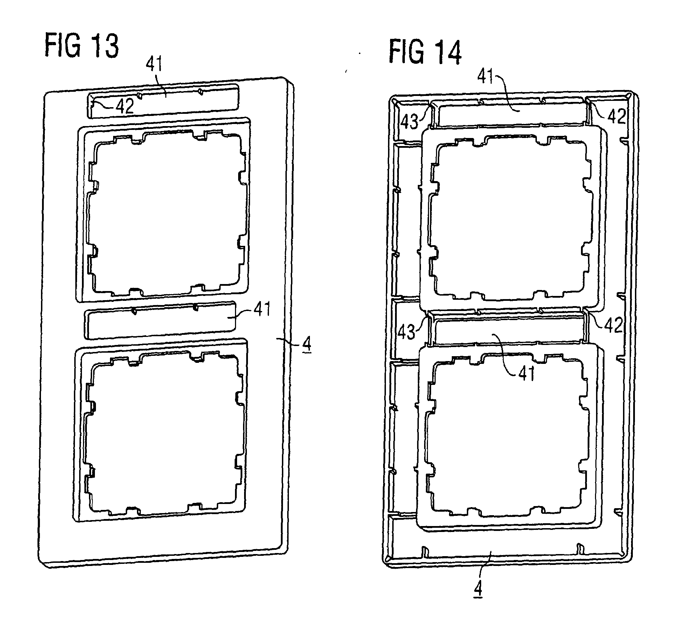

In den FIG 9 bis 14 sind ein Einfach-Abdeckrahmen 1 mit einer Aussparung 11 (FIG 9 und 10) sowie - als Beispiele für Mehrfach-Abdeckrahmen - ein Zweifach-Abdeckrahmen 3 mit Aussparungen 31 (FIG 11 und 12) für waagrechte Beschriftung und ein Zweifach-Abdeckrahmen 4 mit Aussparungen 41 (FIG 13 und 14) für senkrechte Beschriftung dargestellt.

Für die in den FIG 9 bis 14 dargestellten Abdeckrahmen 1, 3 und 4 werden identische Schildmodule 2 verwendet. Die unterschiedlichen Aussparungen 11 bzw. 31 bzw. 41 bei den betreffenden Abdeckrahmen 1 bzw. 3 bzw. 4 sind durch zusätzliche Rippen 12 und 13 (FIG 10) bzw. 32 und 33 (FIG 12) bzw. 42 und 43 (FIG 14) auf der Unterseite des betreffenden Abdeckrahmens 1 bzw. 3 bzw. 4 so angepasst, dass immer das gleiche Schildmodul 2 eingesetzt werden kann.

Die Montage des beschrifteten und montierten Schildmoduls 2 (Beschriftungsteil 23 ist eingelegt bzw. Beschriftungsteil 24 ist eingeklebt) erfolgt nach der Montage des elektrischen Installationsgerätes (die eigentliche Installation ist abgeschlossen) wahlweise vor oder nach der Montage des Abdeckrahmens 1 bzw. 3 bzw. 4. Ein wesentlicher Vorteil ist hierbei die Möglichkeit einer Vorbeschriftung der Schildmodule 2, die nicht am Einsatzort vorgenommen werden muss.

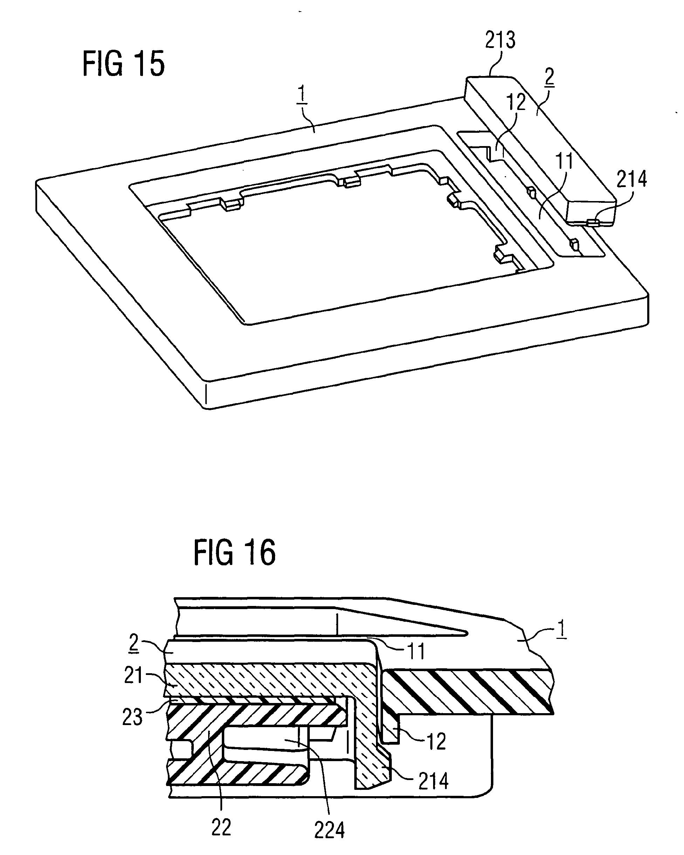

In den FIG 15 und 16 ist die Montage des Schildmoduls am Beispiel eines Einfach-Abdeckrahmens 1 gezeigt.

Wie aus FIG 15 ersichtlich ist, wird das Schildmodul 2 von oben in die Aussparung 11 des Abdeckrahmens 1 bis zum Anschlag eingedrückt. Der Anschlag wird von den Rastrippen 12 und 13 gebildet.

Zur Verrastung des Schildmoduls 2 im Abdeckrahmen 1 sind an den beiden Querseiten des Moduloberteils 21 Rastelemente 213 und 214 angeformt, die im dargestellten Ausführungsbeispiel als Rastnasen ausgebildet sind. Durch die Rastnasen 213 und 214 verrastet das Schildmodul zuverlässig mit dem Abdeckrahmen 1.

Bei der in FIG 15 und 16 dargestellten Ausführungsform des erfindungsgemäßen Abdeckrahmens kann das Schildmodul 2 von vorne, d.h. erst nach erfolgter Installation und vorgenommener Montage des Abdeckrahmens 1 eingeschnappt werden. Die Verrastung mittels der Rastnasen 213 und 214 stellt sicher, dass ein Entfernen des Schildmoduls 2 von vorne und ohne Werkzeug nicht möglich ist.

Das Schildmodul 2 kann hinsichtlich seiner Größe so gewählt werden, dass sowohl eine Beschriftung über ein beiliegendes Bezeichnungsschild (Beschriftungsteil 23) als auch durch einen Beschriftungsstreifen (Beschriftungsteil 24), der z.B. durch ein Beschriftungsgerät beschriftbar ist, möglich ist.

## Patentansprüche

1. Abdeckrahmen für ein elektrisches Installationsgerät, der wenigstens einen Bezeichnungsschildträger mit wenigstens einem Beschriftungsteil aufweist, **dadurch gekennzeichnet, dass** der wenigstens eine Bezeichnungsschildträger als Schildmodul (2) ausgebildet ist, das in wenigstens eine Aussparung (11,31,41) des Abdeckrahmens (1, 3,4) einsetzbar ist.

2. Abdeckrahmen nach Anspruch 1, **dadurch gekennzeichnet, dass** das Schildmodul (2) Rastelemente aufweist, durch die das Schildmodul (2) beim Einsetzen in die Aussparung (11,31,41) des Abdeckrahmens (1, 3,4) mit dem Abdeckrahmen (1,3,4) verrastet.

3. Abdeckrahmen nach Anspruch 1, **dadurch gekennzeichnet, dass** das Schildmodul (2) aus einem Moduloberteil (21) und einem Modulunterteil (22) besteht, zwischen denen wenigstens ein Beschriftungsteil (23,24) angeordnet ist.

4. Abdeckrahmen nach Anspruch 3, **dadurch gekennzeichnet, dass** das Moduloberteil (21) und das Modulunterteil (22) durch Rastnasen (211,212) und korrespondierende Rastnuten (225,226) miteinander verrastbar sind.

5. Abdeckrahmen nach Anspruch 1, **dadurch gekennzeichnet, dass** das Schildmodul (2) eine geschlossene Bauform aufweist.

6. Abdeckrahmen nach Anspruch 1, **dadurch gekennzeichnet, dass** das Modulunterteil (22) wenigstens eine Demontage-Öffnung (223,224) aufweist, die von der Rückseite des Schildmoduls (2) her zugänglich ist.

7. Abdeckrahmen nach Anspruch 2 und 3, **dadurch gekennzeichnet, dass** die Rastelemente (213, 214), die mit dem Abdeckrahmen (1,3,4) verrasten, am Moduloberteil (21) angeordnet sind.

8. Abdeckrahmen nach Anspruch 1, **gekennzeichnet durch** wenigstens eine Auflagefläche für das Schildmodul (2) im Bereich der Aussparung (11).

9. Abdeckrahmen nach Anspruch 1, **dadurch gekennzeichnet, dass** die Auflagefläche an der Rückseite des Abdeckrahmens (1) angeformt ist.

10. Abdeckrahmen nach Anspruch 2, **dadurch gekennzeichnet, dass** die Rückseite des Abdeckrahmens (1) Rastrippen (12,13,32,33,42,43)für die Verrastung des Schildmoduls (2) aufweist.
